# FASCICULE DE BREVET EUROPEEN

(11) **EP 2 836 033 B1**
(45) Date de publication et mention de la délivrance du brevet: **13.01.2021**
(21) Numéro de dépôt: 14180386.6
(22) Date de dépôt: 08.08.2014
(51) Int. Cl.: H04W 52/24, H04W 84/00, H04W 84/12

(54) **Procédé de pilotage d'un équipement électronique, équipement électronique et système de communication associés**
Verfahren zur Steuerung einer elektronischen Vorrichtung, entsprechende elektronische Vorrichtung und System
Method for controlling an electronic device, corresponding electronic device and system

(30) Priorité: 09.08.2013 FR 1357920
(43) Date de publication de la demande: 11.02.2015
(73) Titulaire: ALSTOM Transport Technologies, 93400 Saint-Ouen (FR)
(72) Inventeur: Fayt, Etienne, 7020 NIMY (BE); Comte, Renaud, 38080 SAINT ALBAN DE ROCHE (FR)
(74) Mandataire: Lavoix

(56) Documents cités:
- US-A1- 2005 128 970
- US-A1- 2005 138 671
- US-A1- 2013 170 420
- US-B1- 7 577 415

## Description

La présente invention concerne un procédé de pilotage d'un équipement électronique, l'équipement électronique comportant un émetteur-récepteur radioélectrique et étant apte à communiquer avec une station électronique comportant des moyens radioélectriques de communication, l'émetteur-récepteur radioélectrique étant apte à recevoir des signaux radioélectriques de la part de la station avec un niveau variable de puissance de réception, le niveau de puissance de réception étant fonction du niveau de puissance d'émission de la station, et l'émetteur-récepteur radioélectrique étant apte à émettre des signaux radioélectriques à destination de la station.

L'invention concerne également un équipement électronique apte à communiquer avec une station électronique comportant des moyens radioélectriques de communication. L'équipement comprend un émetteur-récepteur radioélectrique apte à recevoir des signaux radioélectriques de la part de la station avec un niveau variable de puissance de réception, le niveau de puissance de réception étant fonction du niveau de puissance d'émission de la station, l'émetteur-récepteur radioélectrique étant apte à émettre des signaux radioélectriques à destination de la station.

L'invention concerne également un système de communication comportant une pluralité de stations électroniques, chaque station électronique comportant des moyens radioélectriques de communication.

Dans le domaine du transport ferroviaire, on connait différents systèmes de communication assurant le transfert de données informatiques entre un véhicule ferroviaire et une station électronique immobile, disposée le long d'une voie de chemin de fer, également appelée voie ferrée.

Il existe par exemple des systèmes de communication sans fil permettant à un équipement électronique embarqué sur le véhicule ferroviaire de communiquer avec une station électronique fixée au sol. Cette communication est généralement conforme à la norme IEEE 802.11.

Comme le véhicule ferroviaire est en mouvement, le système de communication comporte avantageusement une pluralité de stations électroniques agencées le long de la voie de chemin de fer, afin d'assurer une communication de manière continue avec l'équipement électronique.

On connait par ailleurs un procédé de pilotage permettant à l'équipement électronique de régler la puissance d'émission des données vers la station en fonction de la puissance de réception des données provenant de cette station. Selon ce procédé de pilotage, également connu sous l'acronyme TPC (de l'anglais *Transmit Power Control*)*,* le niveau de puissance d'émission suit une loi de pilotage complexe afin que le niveau de puissance de réception soit à peu près homogène d'un équipement électronique à un autre équipement électronique.

Un tel procédé de pilotage permet à l'équipement d'optimiser sa consommation électrique et de réduire, de façon générale, la pollution électromagnétique de l'environnement. Ce procédé est utilisé principalement dans un environnement statique, dans lequel l'équipement électronique et la station électronique sont sensiblement immobiles. Il est notamment utilisé dans des systèmes de communication conformes à la norme IEEE 802.11.

Toutefois, un tel procédé de pilotage n'est pas adapté pour être utilisé dans un environnement dynamique, par exemple lorsque l'équipement électronique est disposé dans un véhicule ferroviaire en mouvement et communique avec une station électronique immobile, disposée le long d'une voie ferrée.

On connait également le document US 2013/170420 A1 décrivant un procédé de pilotage d'un équipement électronique permettant d'émettre des signaux radioélectriques à deux niveaux de puissance différents.

On connait également le document US 2005/138671 A1 décrivant un procédé de pilotage d'un équipement électronique permettant d'ajuster la qualité d'émission des signaux radioélectriques à la réception d'un signal spécifique émis par d'autres équipements.

Le but de l'invention est donc de proposer un procédé de pilotage permettant d'améliorer la transmission de données entre l'équipement électronique et la ou les stations électroniques, notamment dans un environnement dynamique lorsque l'équipement électronique est disposé dans un véhicule ferroviaire en mouvement et communique avec une station électronique immobile, disposée le long d'une voie ferrée.

À cet effet, l'invention a pour objet un procédé de pilotage conforme à la revendication 1.

Suivant d'autres aspects avantageux de l'invention, le procédé comprend une ou plusieurs des caractéristiques des revendications 2 à 7.

L'invention a également pour objet un équipement électronique conforme à la revendication 8.

Suivant d'autres aspects avantageux de l'invention, l'équipement électronique comprend une ou plusieurs des caractéristiques de la revendication 9.

L'invention a également pour objet un système de communication conforme à la revendication 10.

Suivant un autre aspect avantageux de l'invention, le système de communication comporte la caractéristique de la revendication 11.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue d'un système de communication selon l'invention, le système de communication comportant une pluralité de stations électroniques et un équipement électronique disposé dans un véhicule ferroviaire en mouvement sur une voie de chemin de fer ;
- la figure 2 est une vue schématique de l'équipement électronique de la figure 1 ; et
- la figure 3 est un organigramme d'un procédé de pilotage selon l'invention ;
- la figure 4 est un organigramme d'un procédé de pilotage selon un aspect complémentaire l'invention ; et
- la figure 5 est un schéma illustrant le fonctionnement de l'équipement électronique.

Dans la suite de la description, l'expression « sensiblement égal à » s'entend comme une relation d'égalité à plus ou moins 5 %.

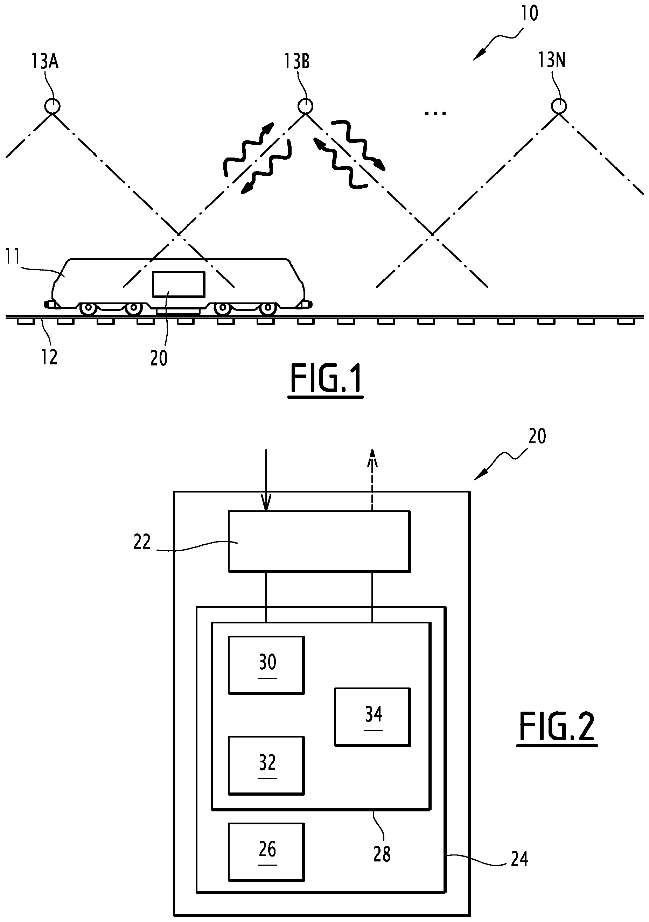

Un système 10 de communication selon l'invention est illustré schématiquement sur la figure 1. Le système de communication 10 est par exemple mis en œuvre dans une installation ferroviaire comportant un véhicule ferroviaire 11 et une voie de chemin de fer 12, également appelée voie ferrée. Le véhicule 11 est apte à se déplacer le long de la voie ferrée 12 avec une vitesse variable.

Le système de communication 10 comporte une pluralité des stations électroniques 13A à 13N, installées par exemple à proximité de la voie ferrée 12, ces stations 13A à 13N étant de préférence immobiles.

Le système de communication 10 comporte en outre un équipement électronique 20, illustré plus en détail sur la figure 2, l'équipement 20 étant propre à échanger des données avec une ou plusieurs stations électroniques 13A à 13N par transmission d'ondes radioélectriques, c'est-à-dire par communication sans fil.

Dans l'exemple de réalisation décrit, le système de communication 10 forme un réseau de communication conforme à la norme IEEE 802.11, également appelée norme Wi-Fi, l'équipement 20 et les stations électroniques 13A à 13N étant conformes à la norme IEEE 802.11.

Bien entendu, le système de communication 10 n'est pas limité à un seul équipement électronique 20. En variante, il comporte une pluralité de tels équipements électroniques 20.

Chaque station 13A à 13N comporte des moyens radioélectriques de communication, non représentés, permettant de recevoir et d'émettre des signaux radioélectriques dans une zone de couverture de cette station. Les moyens radioélectriques de communication de chaque station 13A à 13N sont conformes à la norme IEEE 802.11.

Chaque zone de couverture est définie par une puissance d'émission des signaux radioélectriques de la station correspondante.

Ainsi, par exemple, les stations 13A à 13N sont propres à être fixées le long de la voie 12 ferrée afin d'assurer une couverture continue de la voie ferrée 12. Un exemple d'une telle couverture continue est illustré sur la figure 1.

Dans des conditions réelles d'exploitation, la zone de couverture d'une station 13A à 13N admet des variations en fonction de conditions extérieures comme, par exemple, les conditions de propagation liées au terrain, la présence d'obstacles.

L'équipement électronique 20 est, par exemple, embarqué à bord du véhicule ferroviaire 11, et est apte à communiquer avec au moins une station 13A à 13N dans la zone de sa couverture.

Comme illustrée sur la figure 2, l'équipement électronique 20 comporte un émetteur-récepteur radioélectrique 22 apte à recevoir des signaux radioélectriques de la part d'une station 13A à 13N avec un niveau variable de puissance de réception Pr. Le niveau de réception Pr varie en fonction du niveau de puissance d'émission de la station 13A à 13N.

L'équipement électronique 20 comprend également une unité de traitement d'informations 24, formée par exemple d'un processeur 26 et d'une mémoire 28.

L'émetteur-récepteur 22 est apte à recevoir des signaux radioélectriques de la station 13A à 13N, et est également apte à émettre des signaux radioélectriques vers la station 13A à 13N correspondante avec un niveau de puissance d'émission de valeur variable, le niveau de puissance d'émission étant par exemple égal à un premier niveau de puissance d'émission Pe1 ou à un deuxième niveau de puissance d'émission Pe2.

L'émetteur-récepteur 22 est conforme à la norme IEEE 802.11.

Le premier niveau de puissance d'émission Pe1 est strictement supérieur au deuxième niveau de puissance d'émission Pe2. La valeur du premier niveau de puissance d'émission Pe1 est, par exemple, comprise entre 25 dBm et 30 dBm, de préférence sensiblement égale à 27 dBm. La valeur du deuxième niveau de puissance d'émission Pe2 est, par exemple, comprise entre 17 dBm et 23 dBm, de préférence sensiblement égale à 20 dBm.

La mémoire 28 est apte à stocker un logiciel 30 de mesure du niveau de puissance de réception Pr. La mémoire 28 est également apte à stocker un logiciel 32 de comparaison du niveau de puissance de réception Pr avec au moins un seuil parmi un premier seuil TPC1 et un deuxième seuil TPC2.

Le premier seuil TPC1 est strictement supérieur au deuxième seuil TPC2. La valeur du premier seuil TPC1 est, par exemple, comprise entre -45 dBm et -40 dBm, de préférence sensiblement égale à -42 dBm. La valeur du deuxième seuil TPC2 est, par exemple, comprise entre -45 dBm et -50 dBm, de préférence sensiblement égale à -47 dBm.

La mémoire 28 est apte à stocker un logiciel 34 de pilotage de l'émetteur-récepteur 22, notamment en fonction du niveau de puissance de réception Pr mesuré par le logiciel de mesure 30 et du résultat de la comparaison du niveau de puissance de réception Pr mesuré avec le ou chaque seuil, ce résultat étant fourni par le logiciel de comparaison 32.

Le logiciel de pilotage 34 est apte à piloter le niveau de puissance d'émission de l'émetteur-récepteur 22.

Selon l'invention, le niveau de puissance d'émission des signaux radioélectriques suivants, émis à destination d'une station électronique 13A à 13N correspondante, est égal :
- au premier niveau de puissance d'émission Pe1, si le niveau de puissance de réception Pr, mesuré par le logiciel de mesure 30, est inférieur ou égal au deuxième seuil TPC2, lors de la comparaison effectuée par le logiciel de comparaison 32, ou
- au deuxième niveau de puissance d'émission Pe2, si le niveau de puissance de réception Pr est supérieur ou égal au premier seuil TPC1 lors de la comparaison effectuée par le logiciel de comparaison 32.

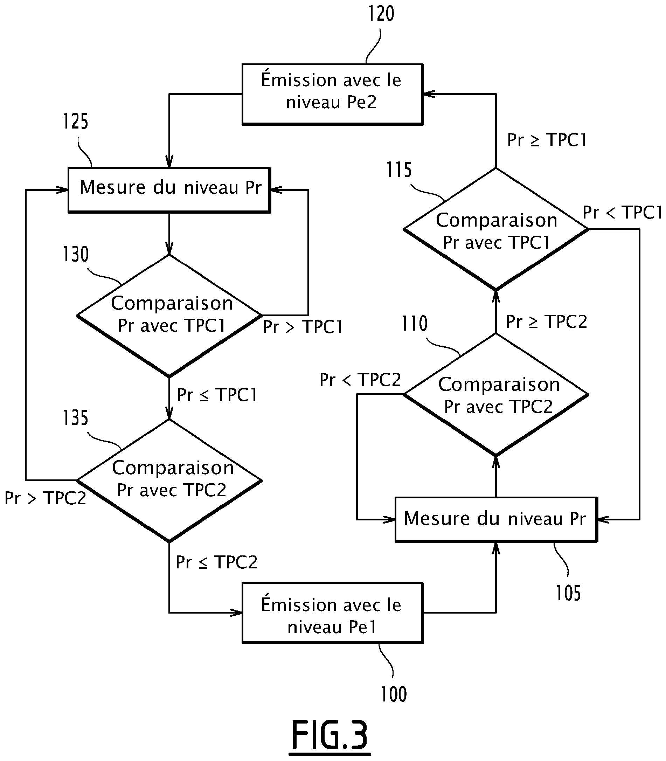

Le fonctionnement du système de communication 10 et de l'équipement électronique 20 va être à présent décrit à l'aide de l'organigramme de la figure 3 illustrant le procédé de pilotage selon l'invention.

Les stations électriques 13A à 13N émettent des signaux radioélectriques, chacune avec un niveau de puissance d'émission déterminé.

L'équipement électronique 20, se retrouvant dans la zone de couverture d'une station 13A à 13N, commence par une émission de signaux radioélectriques vers cette station 13A à 13N.

Lors d'une étape initiale 100, l'émetteur-récepteur 22 de l'équipement électronique émet des signaux radioélectriques vers la station 13A à 13N correspondante avec le premier niveau de puissance d'émission Pe1.

Le logiciel de mesure 30 mesure ensuite le niveau de puissance de réception Pr lors de l'étape 105.

Lors de l'étape 110, le logiciel de comparaison 30 compare le niveau de puissance de réception Pr mesuré à l'étape 105 avec le deuxième seuil TPC2.

Si le niveau de puissance de réception Pr est strictement inférieur au deuxième seuil TPC2, le logiciel de pilotage 34 retourne à l'étape 105.

Si le niveau de puissance de réception Pr est supérieur ou égal au deuxième seuil TPC2, le logiciel de pilotage 34 passe à l'étape 115.

Lors de l'étape 115, le logiciel de comparaison 30 compare le niveau de puissance de réception Pr mesuré à l'étape 105 avec le premier seuil TPC1.

Si le niveau de puissance de réception Pr est strictement inférieur au premier seuil TPC1, le logiciel de pilotage 34 retourne à l'étape 105.

Si le niveau de puissance de réception Pr est supérieur ou égal au premier seuil TPC1, le logiciel de pilotage 34 passe à l'étape 120.

Lors de l'étape 120, l'émetteur-récepteur 22 de l'équipement électronique 20 change de niveau de puissance d'émission, et émet alors des signaux radioélectriques vers la station 13A à 13N correspondante avec le deuxième niveau de puissance d'émission Pe2.

Autrement dit, partant d'un niveau de puissance d'émission égal au premier niveau de puissance d'émission Pe1, le logiciel de pilotage 34 modifie la valeur du niveau de puissance d'émission qui devient égale au deuxième niveau de puissance d'émission Pe2 seulement si le niveau de puissance de réception Pr est supérieur ou égal au premier seuil TPC1.

Tant que le niveau de puissance de réception est strictement inférieur au premier seuil TPC1, ou *a fortiori* inférieur au deuxième seuil TPC2, le deuxième seuil TPC2 étant strictement inférieur au premier seuil TPC1, la valeur du niveau de puissance d'émission n'est pas modifiée par le logiciel de pilotage 34, et reste égale au premier niveau de puissance d'émission Pe1.

Lors de l'étape 125, suite à l'éventuel passage de la valeur du niveau de puissance d'émission au deuxième niveau de puissance d'émission Pe2, le logiciel de mesure 30 mesure le niveau de puissance de réception Pr.

Lors de l'étape 130, le logiciel de comparaison 30 compare le niveau de puissance de réception Pr mesuré à l'étape 125 avec le premier seuil TPC1.

Si le niveau de puissance de réception Pr est strictement supérieur au premier seuil TPC1, le logiciel de pilotage 34 retourne à l'étape 125.

Si le niveau de puissance de réception Pr est inférieur ou égal au premier seuil TPC1, le logiciel de pilotage 34 passe à l'étape 135.

Lors de l'étape 135, le logiciel de comparaison 30 compare le niveau de puissance de réception Pr mesuré à l'étape 125 avec le deuxième seuil TPC2.

Si le niveau de puissance de réception Pr est strictement supérieur au deuxième seuil TPC2, le logiciel de pilotage 34 retourne à l'étape 125.

Si le niveau de puissance de réception Pr est inférieur ou égal au deuxième seuil TPC2, le logiciel de pilotage 34 passe l'étape 100 au cours de laquelle la valeur du niveau de puissance d'émission est changée, et est alors positionnée au premier niveau de puissance d'émission Pe1.

Autrement dit, partant d'un niveau de puissance d'émission égal au deuxième niveau de puissance d'émission Pe2, le logiciel de pilotage 34 modifie la valeur du niveau de puissance d'émission qui devient égale au premier niveau de puissance d'émission Pe1 seulement si le niveau de puissance de réception Pr est inférieur ou égal au deuxième seuil TPC2.

Tant que le niveau de puissance de réception est strictement supérieur au deuxième seuil TPC2, ou *a fortiori* supérieur au premier seuil TPC1, le premier seuil TPC1 étant strictement supérieur au deuxième seuil TPC2, la valeur du niveau de puissance d'émission n'est pas modifiée par le logiciel de pilotage 34, et reste égale au deuxième niveau de puissance d'émission Pe2.

Lorsque la condition testée à l'étape 135 est vérifiée, le procédé retourne à l'étape initiale 100, et le pilotage du niveau d'émission par l'émetteur-récepteur 22 se déroule ainsi en boucle.

L'homme du métier comprendra alors qu'il aurait été possible, en variante, de commencer à émettre les signaux radioélectriques à destination de la station 13A à 13N correspondante avec le deuxième niveau de puissance d'émission Pe2, c'est-à-dire de commencer le procédé à l'étape 120, puis de poursuivre par les étapes 125, 130, 135 avant de passer à l'étape 100 dans le cas où la condition testée à l'étape 135 est vérifiée.

Le procédé de pilotage ainsi défini permet à l'équipement électronique de gérer son niveau de puissance d'émission tout en gardant un niveau stable de connexion avec une station électronique 13A à 13N correspondante, même dans un environnement dynamique, tel que celui du véhicule ferroviaire 11 en mouvement le long de la voie de chemin de fer 12. En effet, partant d'un niveau de puissance d'émission égal au premier niveau de puissance d'émission Pe1, la valeur du niveau de puissance d'émission est modifiée (et devient égale au deuxième niveau de puissance d'émission Pe2) seulement si le niveau de puissance de réception Pr est supérieur ou égal au premier seuil TPC1. De manière analogue, partant d'un niveau de puissance d'émission égal au deuxième niveau de puissance d'émission Pe2, la valeur du niveau de puissance d'émission est modifiée (et devient égale au premier niveau de puissance d'émission Pe1) seulement si le niveau de puissance de réception Pr est inférieur ou égal au deuxième seuil TPC2.

Le niveau de puissance d'émission est ainsi modifié uniquement en cas de variation importante du niveau de puissance de réception Pr, par exemple lorsque le niveau de puissance de réception Pr devient supérieur au premier seuil TPC1, qui présente la plus grande valeur parmi les deux seuils TPC1, TPC2, ou bien lorsque le niveau de puissance de réception Pr devient inférieur au deuxième seuil TPC2, qui présente la plus petite valeur parmi les deux seuils TPC1, TPC2. Le procédé de pilotage n'est donc pas sensible aux faibles variations du niveau de puissance de réception Pr, à la différence du procédé de pilotage de l'état de la technique.

Ceci permet d'améliorer la stabilité des transmissions de données dans le système de communication 10, et également de garantir des meilleurs temps de transfert intercellulaire (de l'anglais *handover*) entre les stations électroniques 13A à 13N.

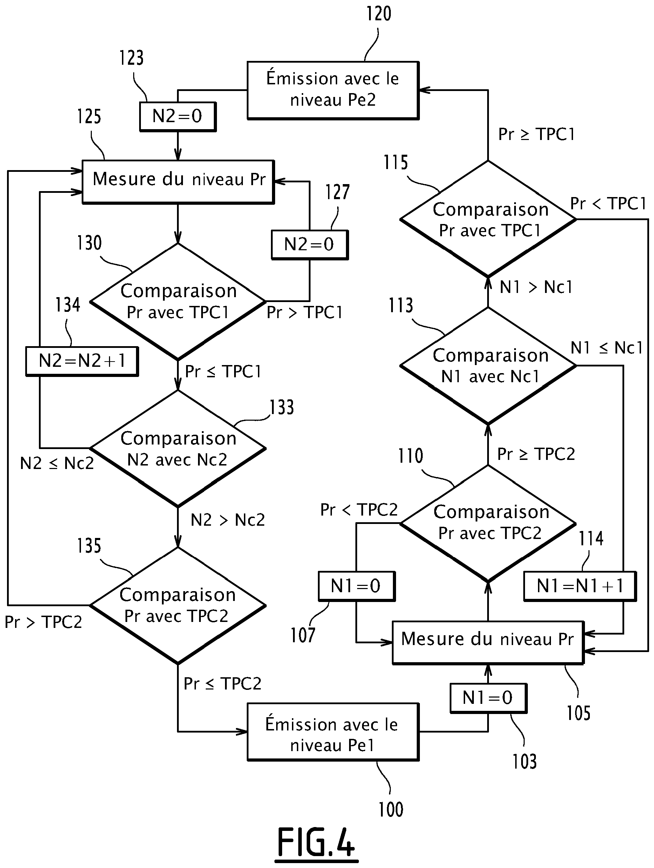

Un organigramme du procédé de pilotage selon un aspect complémentaire de l'invention est illustré sur la figure 4.

Suivant cette figure 4, le procédé de pilotage comporte en outre une étape 103 lors de laquelle le logiciel de pilotage 34 initialise à zéro un premier compteur N1.

Si lors de l'étape 110 de comparaison du niveau de puissance de réception Pr avec le deuxième seuil TPC2, le niveau de puissance de réception Pr est strictement inférieur au deuxième seuil TPC2, le logiciel de pilotage 34 remet à zéro le premier compteur N1 lors de l'étape 107 et passe à l'étape 105 de mesure du niveau de puissance de réception Pr.

Dans le cas contraire, le logiciel de pilotage 34 passe à l'étape 113.

Lors de l'étape 113, le logiciel de comparaison 30 compare le premier compteur N1 avec un premier seuil de nombre de cycles Nc1 correspondant au nombre minimal de cycles consécutifs durant lesquels le niveau de puissance de réception Pr doit être supérieur ou égal au deuxième seuil TPC2 pour que le logiciel de pilotage 34 change le niveau de puissance d'émission.

Si le premier compteur N1 est inférieur ou égal au premier seuil de nombre de cycles Nc1, le logiciel de pilotage 34 incrémente d'une unité le premier compteur N1 lors de l'étape 114 et retourne à l'étape 105.

Dans le cas contraire, le logiciel de pilotage 34 passe à l'étape 115.

De manière analogue, le procédé de pilotage comporte en outre une étape 123 lors de laquelle le logiciel de pilotage 34 initialise à zéro un deuxième compteur N2.

Si lors de l'étape 130 de comparaison du niveau de puissance de réception Pr avec le premier seuil TPC1, le niveau de puissance de réception Pr est strictement supérieur au premier seuil TPC1, le logiciel de pilotage 34 remet à zéro le deuxième compteur N2 lors de l'étape 127 et passe à l'étape 125 de mesure du niveau de puissance de réception Pr.

Dans le cas contraire, le logiciel de pilotage 34 passe à l'étape 133.

Lors de l'étape 133, le logiciel de comparaison 30 compare le deuxième compteur N2 avec un deuxième seuil de nombre de cycles Nc2 correspondant au nombre minimal de cycles consécutifs durant lesquels le niveau de puissance de réception Pr doit être inférieur ou égal au premier seuil TPC1 pour que le logiciel de pilotage 34 change le niveau de puissance d'émission.

Si le deuxième compteur N2 est inférieur ou égal au deuxième seuil de nombre de cycles Nc2, le logiciel de pilotage 34 incrémente d'une unité le deuxième compteur N2 lors de l'étape 134 et retourne à l'étape 125.

Dans le cas contraire, le logiciel de pilotage 34 passe à l'étape 135.

Selon ce procédé de pilotage, l'étape 105 est lancée à chaque cycle d'émission de signaux radioélectriques par les stations électroniques 13A à 13N correspondantes lorsque l'émetteur-récepteur 22 émet des signaux radioélectriques avec le premier niveau de puissance d'émission Pe1.

De manière analogue, l'étape 125 est lancée à chaque cycle d'émission de signaux radioélectriques par les stations électroniques 13A à 13N correspondantes lorsque l'émetteur-récepteur 22 émet des signaux radioélectriques avec le deuxième niveau de puissance d'émission Pe2.

La périodicité de ces cycles est par exemple sensiblement égale à 25 ms.

La valeur de chacun du premier seuil de nombre de cycles Nc1 et du deuxième seuil de nombre de cycles Nc2 est choisie entre 1 et 40, de préférence entre 1 et 12.

Selon le procédé de pilotage décrit ci-dessous, le changement du niveau de puissance d'émission vers le deuxième niveau de puissance d'émission Pe2, s'effectue uniquement lorsque l'étape 110 de comparaison du niveau de puissance de réception Pr avec le deuxième seuil TPC2 indique Nc1 fois consécutives que le niveau de puissance de réception Pr est supérieur ou égal au deuxième seuil TPC2.

De manière analogue, le changement du niveau de puissance d'émission vers le premier niveau de puissance d'émission Pe1, s'effectue uniquement lorsque l'étape 130 de comparaison du niveau de puissance de réception Pr avec le premier seuil TPC1 indique Nc2 fois consécutives que le niveau de puissance de réception Pr est inférieur ou égal au premier seuil TPC1.

Ceci permet d'effectuer un changement du niveau de puissance d'émission seulement lorsque le niveau de puissance de réception Pr est supérieur ou égal au deuxième seuil TPC2 ou lorsque le niveau de puissance de réception Pr est inférieur ou égal au premier seuil TPC1 pendant une période de temps significative égale à 1 s, de préférence égale à 300 ms.

Ceci permet alors d'éviter des changements du niveau de puissance d'émission pour des fluctuations du niveau de puissance de réception Pr autour des seuils TPC1 et TPC2 survenues dans une période temporelle inférieure à 1 s, de préférence inférieure à 300 ms.

De telles fluctuations correspondent notamment à des évanouissements du signal radioélectrique se produisant lorsque par exemple le véhicule ferroviaire 11 entre dans un tunnel.

On conçoit alors que cet aspect complémentaire de l'invention permet de stabiliser le niveau de puissance d'émission lors de fluctuations brusques du niveau de puissance de réception Pr.

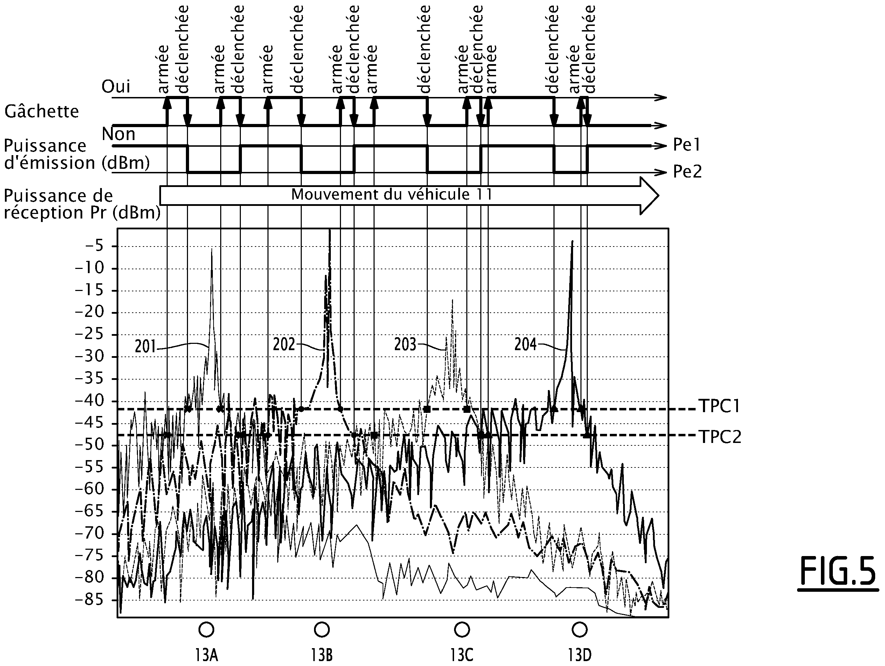

La figure 5 illustre la gestion du niveau de puissance d'émission par l'équipement électronique 20 mise en œuvre par le procédé de pilotage selon l'invention lorsque le véhicule 11 se déplace le long de la voie ferrée 12 à proximité des stations 13A, 13B, 13C et 13D.

Sur cette figure, la courbe 201 correspond au niveau de puissance de réception Pr de signaux radioélectriques émis par la station 13A, mesuré lors des étapes 105 et 125 du procédé, la courbe 202 à celui de puissance de réception Pr de signaux radioélectriques émis par la station 13B, la courbe 203 à celui de puissance de réception Pr de signaux radioélectriques émis par la station 13C, et la courbe 204 à celui de puissance de réception Pr de signaux radioélectriques émis par la station 13D.

Suivant la figure 5, une notion de « gâchette » est illustrée, celle-ci étant « armée » lorsque le niveau de puissance de réception Pr est compris entre les deux seuils TPC1 et TPC2, et étant « déclenchée » lorsque le niveau de puissance de réception Pr est inférieur au deuxième seuil TPC2 ou supérieur au premier seuil TPC1.

Le déclenchement de la gâchette correspond à un changement du niveau de puissance d'émission.

Initialement, l'émetteur-récepteur 22 émet des signaux radioélectriques avec le premier niveau de puissance d'émission Pe1, la gâchette est déclenchée.

Suivant la courbe 201, lorsque le niveau de puissance de réception Pr dévient supérieur ou égal au deuxième seuil TPC2, la gâchette est armée.

Lorsque le niveau de puissance de réception Pr dévient supérieur ou égal au premier seuil TPC1, la gâchette est déclenchée et l'émetteur-récepteur 22 commence à émettre des signaux radioélectriques avec le deuxième niveau de puissance d'émission Pe2.

Lorsque le niveau de puissance de réception Pr dévient inférieur ou égal au premier seuil TPC1, la gâchette est à nouveau armée.

Lorsque le niveau de puissance de réception Pr dévient inférieur ou égal au deuxième seuil TPC2, la gâchette est déclenchée et l'émetteur-récepteur 22 commence à émettre des signaux radioélectriques avec le premier niveau de puissance d'émission Pe1.

Ce principe de fonctionnement reste valable pour les autres courbes 202, 203 et 204 correspondant aux stations 13B, 13C et 13D.

## Revendications

1. Procédé de pilotage d'un équipement électronique (20), l'équipement électronique (20) comportant un émetteur-récepteur radioélectrique (22) et étant apte à communiquer avec une station électronique (13A, ..., 13N) comportant des moyens radioélectriques de communication, l'émetteur-récepteur radioélectrique (22) étant apte à recevoir des signaux radioélectriques de la part de la station (13A, ..., 13N) avec un niveau variable de puissance de réception (Pr), le niveau de puissance de réception (Pr) étant fonction du niveau de puissance d'émission de la station (13A, ..., 13N), et l'émetteur-récepteur radioélectrique (22) étant apte à émettre des signaux radioélectriques à destination de la station (13A, ..., 13N) ;
le procédé comprenant les étapes suivantes :
- la mesure (105, 125) par l'équipement électronique (20) du niveau de puissance de réception (Pr) des signaux radioélectriques issus de la station (13A, ..., 13N) ;
- la comparaison (110, 115, 130, 135) du niveau de puissance de réception (Pr) avec au moins un seuil parmi un premier seuil (TPC1) et un deuxième seuil (TPC2), le premier seuil (TPC1) étant supérieur au deuxième seuil (TPC2), et
- l'émission (120 ; 100) des signaux radioélectriques suivants, par l'émetteur-récepteur (22), avec un niveau de puissance égal :
+ à un premier niveau de puissance d'émission (Pe1) si le niveau de puissance de réception (Pr) est inférieur ou égal au deuxième seuil (TPC2) lors de l'étape de comparaison précédente, ou
+ à un deuxième niveau de puissance d'émission (Pe2) si le niveau de puissance de réception (Pr) est supérieur ou égal au premier seuil (TPC1) lors de l'étape de comparaison précédente,
le premier niveau de puissance d'émission (Pe1) étant strictement supérieur au deuxième niveau de puissance d'émission (Pe2) ;
le procédé étant **caractérisé en ce que** lors de l'émission des signaux radioélectriques avec le deuxième niveau de puissance d'émission (Pe2), l'émetteur-récepteur (22) étant apte à émettre des signaux radioélectriques suivants avec le premier niveau de puissance d'émission (Pe1) si, en outre, le niveau de puissance de réception (Pr) est inférieur ou égal au premier seuil (TPC1) durant Nc2 étapes consécutives de comparaison précédentes, Nc2 étant un nombre entier supérieur ou égal à deux.

2. Procédé selon la revendication 1, dans lequel le procédé comprend en outre une étape initiale (100) d'émission des signaux radioélectriques par l'émetteur-récepteur (22) avec le premier niveau de puissance d'émission (Pe1).

3. Procédé selon la revendication 1, dans lequel le procédé comprend en outre une étape initiale (120) d'émission des signaux radioélectriques par l'émetteur-récepteur (22) avec le deuxième niveau de puissance d'émission (Pe2).

4. Procédé selon l'une quelconque des revendications précédentes, dans lequel l'émetteur-récepteur radioélectrique (22) et les moyens radioélectriques de communication sont conformes à la norme IEEE 802.11.

5. Procédé selon l'une quelconque des revendications précédentes, dans lequel la valeur du premier seuil (TPC1) est comprise entre -45 dBm et -40 dBm, de préférence sensiblement égale à -42 dBm.

6. Procédé selon l'une quelconque des revendications précédentes, dans lequel la valeur du deuxième seuil (TPC2) est comprise entre -50 dBm et -45 dBm, de préférence sensiblement égale à -47 dBm.

7. Procédé selon l'une quelconque des revendications précédentes, dans lequel lors de l'émission des signaux radioélectriques avec le premier niveau de puissance d'émission (Pe1), l'émetteur-récepteur (22) est apte à émettre des signaux radioélectriques suivants avec le deuxième niveau de puissance d'émission (Pe2) si, en outre, le niveau de puissance de réception (Pr) est supérieur ou égal au deuxième seuil (TPC2) durant Nc1 étapes consécutives de comparaison précédentes, Nc1 étant un nombre entier supérieur ou égal à deux.

8. Équipement électronique (20) apte à communiquer avec une station (13A, ..., 13N) électronique comportant des moyens radioélectriques de communication, l'équipement (20) comprenant :
- un émetteur-récepteur radioélectrique (22) apte à recevoir des signaux radioélectriques de la part de la station (13A, ..., 13N) avec un niveau variable de puissance de réception (Pr), le niveau de puissance de réception (Pr) étant fonction du niveau de puissance d'émission de la station (13A, ..., 13N), l'émetteur-récepteur radioélectrique (22) étant apte à émettre des signaux radioélectriques à destination de la station (13A, ..., 13N)
- des moyens (30) de mesure du niveau de puissance de réception (Pr) des signaux radioélectriques issus de la station (13A, ..., 13N) ;
- des moyens (32) de comparaison du niveau de puissance de réception (Pr) avec au moins un seuil parmi un premier seuil (TPC1) et un deuxième seuil (TPC2), le premier seuil (TPC1) étant supérieur au deuxième seuil (TPC2) ;
l'émetteur-récepteur (22) étant apte à émettre des signaux radioélectriques suivants avec un niveau de puissance égal :
+ à un premier niveau de puissance d'émission (Pe1) si le niveau de puissance de réception (Pr) est inférieur ou égal au deuxième seuil (TPC2), ou
+ à un deuxième niveau de puissance d'émission (Pe2) si le niveau de puissance de réception (Pr) est supérieur ou égal au premier seuil (TPC1),
le premier niveau de puissance d'émission (Pe1) étant strictement supérieur au deuxième niveau de puissance d'émission (Pe2) ;
**caractérisé en ce que** l'émetteur-récepteur (22), lors de l'émission des signaux radioélectriques avec le deuxième niveau de puissance d'émission (Pe2), est apte à émettre des signaux radioélectriques suivants avec le premier niveau de puissance d'émission (Pe1) si, en outre, le niveau de puissance de réception (Pr) est inférieur ou égal au premier seuil (TPC1) durant Nc2 étapes consécutives de comparaison précédentes, Nc2 étant un nombre entier supérieur ou égal à deux.

9. Équipement selon la revendication 8, **caractérisé en ce que** l'émetteur-récepteur (22), lors de l'émission des signaux radioélectriques avec le premier niveau de puissance d'émission (Pe1), est apte à émettre des signaux radioélectriques suivants avec le deuxième niveau de puissance d'émission (Pe2) si, en outre, le niveau de puissance de réception (Pr) est supérieur ou égal au deuxième seuil (TPC2) durant Nc1 étapes consécutives de comparaison précédentes, Nc1 étant un nombre entier supérieur ou égal à deux.

10. Système (10) de communication comportant une pluralité de stations (13A, ..., 13N) électroniques, chaque station électronique (13A, ..., 13N) comportant des moyens radioélectriques de communication, **caractérisé en ce qu'**il comporte en outre au moins un équipement électronique (20) selon la revendication 8 ou 9, apte à communiquer avec au moins une station (13A, ..., 13N) électronique.

11. Système (10) de communication selon la revendication 10, **caractérisé en ce que** chaque équipement électronique (20) est propre à être disposé dans un véhicule (11) ferroviaire en mouvement, et est apte à communiquer avec au moins une station électronique immobile, disposée le long d'une voie ferrée.

## Patentansprüche

1. Verfahren zum Steuern einer elektronischen Einrichtung (20), wobei die elektronische Einrichtung (20) einen Funktransceiver (22) aufweist und in der Lage ist, mit einer elektronischen Station (13A, ..., 13N) zu kommunizieren, die Funkkommunikationsmittel aufweist, wobei der Funktransceiver (22) in der Lage ist, Funksignale von der Station (13A, ..., 13N) mit einem variablen Empfangsleistungspegel (Pr) zu empfangen, wobei der Empfangsleistungspegel (Pr) von dem Sendeleistungspegels der Station (13A, ..., 13N) abhängt, und der Funktransceiver (22) in der Lage ist, Funksignale an die Station (13A, ..., 13N) zu senden;
wobei das Verfahren die folgenden Schritte aufweist:
- Messen (105, 125), durch die elektronische Einrichtung (20), des Empfangsleistungspegels (Pr) der von der Station (13A, ..., 13N) stammenden Funksignale;
- Vergleichen (110, 115, 130, 135) des Empfangsleistungspegels (Pr) mit mindestens einem Schwellenwert von einem ersten Schwellenwert (TPC1) und einem zweiten Schwellenwert (TPC2), wobei der erste Schwellenwert (TPC1) größer als der zweite Schwellenwert (TPC2) ist, und
- Senden (120; 100) der nachfolgenden Funksignale durch den Transceiver (22) mit einem Leistungspegel, der gleich ist wie:
+ ein erster Sendeleistungspegel (Pe1), wenn der Empfangsleistungspegel (Pr) kleiner oder gleich dem zweiten Schwellenwert (TPC2) im vorangehenden Schritt des Vergleichens ist, oder
+ ein zweiter Sendeleistungspegel (Pe2), wenn der Empfangsleistungspegel (Pr) größer oder gleich dem ersten Schwellenwert (TPC1) im vorangehenden Schritt des Vergleichens ist,
wobei der erste Sendeleistungspegel (Pe1) strikt größer als der zweite Sendeleistungspegel (Pe2) ist;
wobei das Verfahren **dadurch gekennzeichnet ist, dass** beim Senden der Funksignale mit dem zweiten Sendeleistungspegel (Pe2) der Transceiver (22) in der Lage ist, nachfolgende Funksignale mit dem ersten Sendeleistungspegel (Pe1) zu senden, wenn darüber hinaus der Empfangsleistungspegel (Pr) kleiner oder gleich dem ersten Schwellenwert (TPC1) während Nc2 aufeinanderfolgenden vorangehenden Vergleichsschritten ist, wobei Nc2 eine ganze Zahl größer oder gleich zwei ist.

2. Verfahren gemäß Anspruch 1, wobei das Verfahren ferner einen Anfangsschritt (100) des Sendens der Funksignale durch den Transceiver (22) mit dem ersten Sendeleistungspegel (Pe1) aufweist.

3. Verfahren gemäß Anspruch 1, wobei das Verfahren ferner einen Anfangsschritt (120) des Sendens der Funksignale durch den Transceiver (22) mit dem zweiten Sendeleistungspegel (Pe2) aufweist.

4. Verfahren gemäß irgendeinem der vorhergehenden Ansprüche, wobei der Funktransceiver (22) und die Funkkommunikationsmittel dem IEEE 802.11-Standard entsprechen.

5. Verfahren gemäß irgendeinem der vorhergehenden Ansprüche, wobei der Wert des ersten Schwellenwertes (TPC1) zwischen -45 dBm und -40 dBm liegt, vorzugsweise im Wesentlichen gleich -42 dBm ist.

6. Verfahren gemäß irgendeinem der vorhergehenden Ansprüche, wobei der Wert des zweiten Schwellenwertes (TPC2) zwischen -50 dBm und -45 dBm liegt, vorzugsweise im Wesentlichen gleich -47 dBm ist.

7. Verfahren gemäß irgendeinem der vorhergehenden Ansprüche, wobei beim Senden der Funksignale mit dem ersten Sendeleistungspegel (Pe1) der Transceiver (22) in der Lage ist, nachfolgende Funksignale mit dem zweiten Sendeleistungspegel (Pe2) zu senden, wenn ferner der Empfangsleistungspegel (Pr) während Nc1 aufeinanderfolgenden vorangehenden Vergleichsschritten größer oder gleich dem zweiten Schwellenwert (TPC2) ist, wobei Nc1 eine ganze Zahl größer oder gleich zwei ist.

8. Elektronische Einrichtung (20), die in der Lage ist, mit einer elektronischen Station (13A, ..., 13N) zu kommunizieren, die Funkkommunikationsmittel aufweist, wobei die Einrichtung (20) aufweist:
- einen Funktransceiver (22), der in der Lage ist, Funksignale von der Station (13A, ..., 13N) mit einem variablen Empfangsleistungspegel (Pr) zu empfangen, wobei der Empfangsleistungspegel (Pr) vom Sendeleistungspegel der Station (13A, ..., 13N) abhängt, wobei der Funktransceiver (22) in der Lage ist, Funksignale an die Station (13A, ..., 13N) zu senden,
- Mittel (30) zum Messen des Empfangsleistungspegels (Pr) der von der Station (13A, ..., 13N) stammenden Funksignale;
- Mittel (32) zum Vergleichen des Empfangsleistungspegels (Pr) mit mindestens einem Schwellenwert von einem ersten Schwellenwert (TPC1) und einem zweiten Schwellenwert (TPC2), wobei der erste Schwellenwert (TPC1) größer als der zweite Schwellenwert (TPC2) ist;
wobei der Transceiver (22) in der Lage ist, nachfolgende Funksignale mit einem Leistungspegel zu senden, der gleich ist, wie:
+ ein erster Sendeleistungspegel (Pe1), wenn der Empfangsleistungspegel (Pr) kleiner oder gleich dem zweiten Schwellenwert (TPC2) ist, oder
+ ein zweiter Sendeleistungspegel (Pe2), wenn der Empfangsleistungspegel (Pr) größer oder gleich dem (Pr) größer oder gleich dem ersten Schwellenwert (TPC1) ist,
wobei der erste Sendeleistungspegel (Pe1) strikt größer als der zweite Sendeleistungspegel (Pe2) ist;
**dadurch gekennzeichnet, dass** der Transceiver (22) beim Senden der Funksignale mit dem zweiten Sendeleistungspegel (Pe2) in der Lage ist, nachfolgende Funksignale mit dem ersten Sendeleistungspegel (Pe1) zu senden, wenn ferner der Empfangsleistungspegel (Pr) während Nc2 aufeinanderfolgenden vorangehenden Vergleichsschritten kleiner oder gleich dem ersten Schwellenwert (TPC1) ist, wobei Nc2 eine ganze Zahl größer oder gleich zwei ist.

9. Einrichtung gemäß Anspruch 8, **dadurch gekennzeichnet, dass** der Transceiver (22) beim Senden der Funksignale mit dem ersten Sendeleistungspegel (Pe1) in der Lage ist, nachfolgende Funksignale mit dem zweiten Sendeleistungspegel (Pe2) zu senden, wenn ferner der Empfangsleistungspegel (Pr) während Nc1 aufeinanderfolgenden vorangehenden Vergleichsschritten größer oder gleich dem zweiten Schwellenwert (TPC2) ist, wobei Nc1 eine ganze Zahl größer oder gleich zwei ist.

10. Kommunikationssystem (10), das eine Mehrzahl von elektronischen Stationen (13A, ..., 13N) aufweist, wobei jede elektronische Station (13A, ..., 13N) Funkkommunikationsmittel aufweist, **dadurch gekennzeichnet, dass** es ferner mindestens eine elektronische Einrichtung (20) gemäß Anspruch 8 oder 9 aufweist, das in der Lage ist, mit mindestens einer elektronischen Station (13A, ..., 13N) zu kommunizieren.

11. Kommunikationssystem (10) gemäß Anspruch 10, **dadurch gekennzeichnet, dass** jede elektronische Einrichtung (20) geeignet ist, in einem sich bewegenden Schienenfahrzeug (11) angeordnet zu sein, und in der Lage ist, mit mindestens einer festen elektronischen Station zu kommunizieren, die entlang einer Eisenbahnschiene angeordnet ist.

## Claims

1. A method for controlling electronic equipment (20), the electronic equipment (20) including a wireless transceiver (22) and being able to communicate with an electronic station (13A, ..., 13N) including wireless communication means, the wireless transceiver (22) being able to receive wireless signals from the station (13A, ..., 13N) with a variable receiving power level (Pr), the receiving power level (Pr) depending on the transmission power level of the station (13A, ..., 13N), and the wireless transceiver (22) being able to transmit wireless signals to the station (13A, ..., 13N);
the method comprising the following steps:
- the electronic equipment (20) measures (105, 125) the receiving power level (Pr) of the wireless signals from the station (13A, ..., 13N);
- the receiving power level (Pr) is compared (110, 115, 130, 135) with at least one threshold from among a first threshold (TPC1) and a second threshold (TPC2), the first threshold (TPC1) being greater than the second threshold (TPC2), and
- the transceiver (22) transmits (120; 100) the following wireless signals, with a power level equal to:
+ a first transmission power level (Pe1) if the receiving power level (Pr) is less than or equal to the second threshold (TPC2) during the preceding comparison step, or
+ a second transmission power level (Pe2) if the receiving power level (Pr) is greater than or equal to the first threshold (TPC1) during the preceding comparison step,
the first transmission power level (Pe1) is strictly greater than the second transmission power level (Pe2),
the method being **characterized in that** during transmission of the wireless signals with the second transmission power level (Pe2), the transceiver (22) is able to transmit the following wireless signals with the first transmission power level (Pe1) if, in addition, the receiving power level (Pr) is less than or equal to the first threshold (TPC1) for Nc2 consecutive preceding comparison steps, Nc2 being an integer greater than or equal to two.

2. The method according to claim 1, wherein the method further comprises an initial step (100) for the transmission of wireless signals by the transceiver (22) with the first transmission power level (Pe1).

3. The method according to claim 1, wherein the method further comprises an initial step (120) for the transmission of wireless signals by the transceiver (22) with the second transmission power level (Pe2).

4. The method according to any one of the preceding claims, wherein the wireless transceiver (22) and wireless communication means are in accordance with standard IEEE 802.11.

5. The method according to any one of the preceding claims, wherein the value of the first threshold (TPC1) is comprised between -45 dBm and -40 dBm, preferably substantially equal to -42 dBm.

6. The method according to any one of the preceding claims, wherein the value of the second threshold (TPC2) is comprised between -50 dBm and -45 dBm, preferably substantially equal to -47 dBm.

7. The method according to any one of the preceding claims, wherein during transmission of wireless signals with the first transmission power level (Pe1), the transceiver (22) is able to transmit the following wireless signals with the second transmission power level (Pe2) if, in addition, the receiving power level (Pr) is greater than or equal to the second threshold (TPC2) for Nc1 consecutive preceding comparison steps, Nc1 being an integer greater than or equal to two.

8. A piece of electronic equipment (20) able to communicate with an electronic station (13A, ..., 13N) including wireless communication means, the equipment (20) comprising:
- a wireless transceiver (22) able to receive wireless signals from the station (13A, ..., 13N) with a variable receiving power level (Pr), the receiving power level (Pr) depending on the transmission power level of the station (13A, ..., 13N), the wireless transceiver (22) being able to transmit wireless signals to the station (13A, ..., 13N),
- means (30) for measuring the receiving power level (Pr) of the wireless signals from the station (13A, ..., 13N);
- means (32) for comparing the receiving power level (Pr) with at least one threshold from among a first threshold (TPC1) and a second threshold (TPC2), the first threshold (TPC1) being greater than the second threshold (TPC2), and
the transceiver (22) being able to transmit the following wireless signals with a power level equal to:
+ a first transmission power level (Pe1) if the receiving power level (Pr) is less than or equal to the second threshold (TPC2), or
+ a second transmission power level (Pe2) if the receiving power level (Pr) is greater than or equal to the first threshold (TPC1),
the first transmission power level (Pe1) is strictly greater than the second transmission power level (Pe2),
**characterized in that** the transceiver (22), during the transmission of the wireless signals with the second transmission power level (Pe2), is able to transmit the following wireless signals with the first transmission power level (Pe1) if, in addition, the receiving power level (Pr) is less than or equal to the first threshold (TPC1) for Nc2 consecutive preceding comparison steps, Nc2 being an integer greater than or equal to two.

9. The equipment according to claim 8, **characterized in that** the transceiver (22), during the transmission of the wireless signals with the first transmission power level (Pe1), is able to transmit the following wireless signals with the second transmission power (Pe2) level if, in addition, the receiving power level (Pr) is greater than or equal to the second threshold (TPC2) for Nc1 consecutive preceding comparison steps, Nc1 being an integer greater than or equal to two.

10. A communication system (10) including a plurality of electronic stations (13A, ..., 13N), each electronic station (13A, ..., 13N) including wireless communication means, **characterized in that** it further includes at least one piece of electronic equipment (20) according to claim 8 or 9, able to communicate with at least one electronic station (13A, ..., 13N).

11. The communication system (10) according to claim 10, **characterized in that** each piece of electronic equipment (20) is able to be positioned in a moving railroad vehicle (11), and is able to communicate with at least one immobile electronic station, positioned along a railroad track.
